# EUROPEAN PATENT SPECIFICATION

(11) **EP 4 280 035 B1**
(45) Date of publication and mention of the grant of the patent: **25.03.2026**
(21) Application number: 22739142.2
(22) Date of filing: 14.01.2022
(51) Int. Cl.: G06F 3/01, G06F 9/451, G06F 3/0346, G04C 3/00, G06F 1/16, G06F 1/3215, G06F 1/3231, G06F 1/3234

(54) **SCREEN CONTROL METHOD AND APPARATUS, AND ELECTRONIC DEVICE**
BILDSCHIRMSTEUERUNGSVERFAHREN UND -VORRICHTUNG SOWIE ELEKTRONISCHE VORRICHTUNG
PROCÉDÉ ET APPAREIL DE COMMANDE D'ÉCRAN ET DISPOSITIF ÉLECTRONIQUE

(30) Priority: 15.01.2021 CN 202110057594
(43) Date of publication of application: 22.11.2023
(73) Proprietor: Vivo Mobile Communication Co., Ltd., Dongguan, Guangdong 523863 (CN)
(72) Inventor: WANG, Feng, Dongguan, Guangdong 523863 (CN); YIN, Hong, Dongguan, Guangdong 523863 (CN)
(74) Representative: Murgitroyd & Company
(86) International application number: PCT/CN2022/072133
(87) International publication number: WO 2022/152267

(56) References cited:
- EP-A1- 3 336 616
- EP-A2- 3 270 266
- CN-A- 106 227 355
- CN-A- 111 722 692
- CN-A- 111 750 895
- CN-A- 112 711 334
- US-A1- 2015 022 438
- US-A1- 2018 078 183

## Description

### TECHNICAL FIELD

This application pertains to the field of communications technologies, and specifically relates to a screen control method and apparatus, and an electronic device.

### BACKGROUND

With the technological development of electronic devices, there are more and more types of electronic devices. In an example in which an electronic device is a smartwatch, when a user uses the smartwatch, in order to save power, the existing smartwatch usually has a function of controlling a display screen to be on and off based on a motion state of a wrist of the user. Generally, the display screen of the smartwatch needs to be on when the wrist of the user is raised, and the display screen is off when the wrist of the user is lowered. This function can be implemented by determining a motion direction of the smartwatch by the smartwatch.

However, in the related art, there is a decision error of the electronic device in determining whether the display screen is turned on or turned off, thereby reducing efficiency in using the portable electronic device by the user.

US 20150022438A1 discloses that a watch type mobile terminal including a display configured to display a first image information, a case of which a front surface the display is coupled to, a strap connected to the case and securely wound around a user's arm, a position sensor configured to sense inclination of the case and variation of a position of the case, and a controller configured to convert a state of the display into an activated state from a deactivated state, when position variation corresponding to a preset activating gesture is sensed by the position sensor.

EP 3336616A1 discloses that a wristwatch provided with a display unit with which the top and bottom of a display can be inverted when being observed, and vibration transferring units for cartilage conduction provided respectively in the vicinity of the distal end of the radius and in a part in contact with the distal end of the ulna when being worn. The wristwatch is provided with an operating portion which is located at the back of the hand when being worn. The orientation whereby the top and bottom of the display unit are in an upright condition is determined on the basis of an acceleration detected by an acceleration detecting unit, and a determination is performed on the basis of a mean value of gravitational acceleration to determine whether the wristwatch is being worn with the operating portion facing up or down.

US 20180078183A1 discloses that the strap includes a plurality of elastic sections and a plurality of rigid sections. Each elastic section includes one or more flex sensors. In some examples, on or more electromyography (EMG) sensors can be included to measure the user's electrical signals, and the user's muscle activity can be determined. In some examples, a plurality of strain gauges are included to generate one or more signals indicative of any changes in shape, size, and/or physical properties of the user's wrist. In some examples, the device includes a plurality of capacitance sensors for increased granularity and/or sensitivity in measuring the amount of tension exerted by the user's wrist.

EP 3270266A2 discloses that a first sensing data is detected by using the at least one sensor. A plurality of second sensing data is respectively received from the plurality of sensing devices by using the communication device. The first sensing data and each of the second sensing data are analyzed to obtain a moving pattern of the electronic apparatus and each of the sensing devices. A position on a user's body of each of the sensing devices is detected by comparing the moving patterns with at least one movement model.

### SUMMARY

Embodiments of this application aim to provide a screen control method and apparatus, and an electronic device, to resolve a problem that efficiency of using a portable electronic device by a user is reduced due to a decision error of the electronic device in determining whether a display screen is turned on or turned off.

To resolve the foregoing technical problem, this application is implemented as follows:
According to a first aspect, an embodiment of this application provides a screen control method. The method is applied to an electronic device and defined in claim 1.

According to a second aspect, an embodiment of this application provides a screen control apparatus, which is defined in claim 6.

According to a third aspect, an embodiment of this application provides a readable storage medium, which is defined in claim 12.

According to a fourth aspect, an embodiment of this application provides a chip, which is defined in claim 13.

According to a fifth aspect, an embodiment of this application provides a computer program product, which is defined in claim 14.

Further advantageous embodiments of the present application are indicated in the dependent claims. It is to be understood that both the foregoing general description and the following detailed description are exemplary only, are not restrictive of the present disclosure.

### BRIEF DESCRIPTION OF DRAWINGS

FIG. 1 is a schematic flowchart of a screen control method according to an embodiment of this application;
FIGS. 2a-2b are a first schematic diagram of a variation fluctuation of a first motion parameter used in a screen control method according to an embodiment of this application;
FIGS. 3a-3b are a second schematic diagram of a variation fluctuation of a first motion parameter used in a screen control method according to an embodiment of this application;
FIG. 4 is a schematic structural diagram of a screen control apparatus according to an embodiment of this application;
FIG. 5 is a first schematic structural diagram of an electronic device according to an embodiment of this application; and
FIG. 6 is a second schematic structural diagram of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application.

In the specification and claims of this application, the terms "first", "second", and the like are intended to distinguish between similar objects but do not describe a specific order or sequence. It should be understood that, data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and the claims, "and/or" represents at least one of connected objects, and a character "/" generally represents an "or" relationship between associated objects.

The term "centripetal force parameter" in the embodiments of this application is explained as follows:
Centripetal force is resultant force directed toward a center of a circle (a center of curvature) as an object moves along a circumference or a curved track. The term "centripetal force" is named from an effect produced by this resultant force action, and this effect may be produced by any force such as elastic force, gravity force, or friction force or may be provided by resultant force of several types of force or a component thereof.

Because a circular motion belongs to a curvilinear motion, the object in the circular motion is also subjected to resultant force having different velocity directions. The centripetal force is tension for the object in the circular motion, and a direction of the centripetal force constantly changes as the object moves on the curved track. This tension is directed toward a center of the circumference along a circumferential radius, and therefore is named as the "centripetal force". The centripetal force is directed toward the center of the circumference, and the object controlled by the centripetal force moves in a tangential direction.

A magnitude of the centripetal force is closely related to a mass (m) of the object, a length (r) of the circumferential radius for movement of the object, and an angular velocity (ω).

The centripetal force parameter in the embodiments of this application may include a direction parameter of the centripetal force.

With reference to the accompanying drawings, a screen control method provided in the embodiments of this application is described in detail by using specific embodiments and application scenes.

The screen control method provided in the embodiments of this application may be used in a scene containing a detectable centripetal force parameter when a user wears an electronic device during motion.

For the scene containing the detectable centripetal force parameter when the user wears the electronic device during motion, functions and types of existing electronic devices are increasing. In an example in which the electronic device is a smartwatch, when the user wears the smartwatch, in order to save power, the existing smartwatch usually has a function of controlling a display screen to be on and off based on a motion state of a wrist of the user. Generally, the display screen of the smartwatch needs to be on when the wrist of the user is raised, and the display screen is off when the wrist of the user is lowered. This function can be implemented by determining a motion direction of the smartwatch by the smartwatch.

However, when the electronic device is at different positions, it is determined that motion directions of the display screen are different in on and off states. For example, when the smartwatch is worn on a left hand and a right hand, it is determined that the motion directions of the display screen are exactly opposite in the on and off states. Therefore, in a case that an accurate wearing position of the electronic device cannot be accurately determined, there is a decision error of the electronic device in determining whether the display screen is turned on or turned off, thereby reducing efficiency in using the electronic device by the user.

In this embodiment of this application, in a case that a user wears an electronic device, the electronic device first detects a first motion parameter of the electronic device, and then determines, based on the detected first motion parameter, a wearing position of a user wearing the electronic device. After the wearing position is determined, a screen of the electronic device is turned on in a case that the wearing position is a first position and a second motion parameter of the electronic device meets a first preset condition; or the screen of the electronic device is turned off in a case that the wearing position is the first position and the second motion parameter of the electronic device meets a second preset condition, where the first preset condition and the second preset condition respectively match the first position. In this way, the first motion parameter of the electronic device is detected, so that the wearing position of the user wearing the electronic device can be accurately determined. Therefore, a screen-on operation and a screen-off operation can be accurately determined when the user raises a wrist to view the electronic device, and the user can view content displayed on a display screen of the electronic device, thereby improving efficiency of using the electronic device by the user.

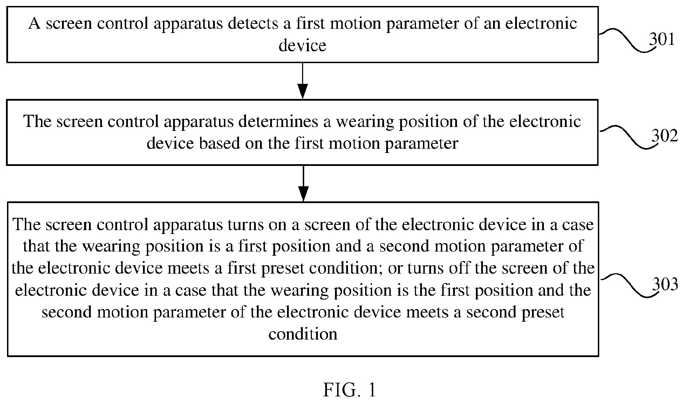

This embodiment provides a screen control method. As shown in FIG. 1, this embodiment is applied to an electronic device. The screen control method includes step 301 to step 303.

Step 301: A screen control apparatus detects a first motion parameter of the electronic device.

In this embodiment of this application, the electronic device may be a portable electronic device, and the portable electronic device may be a portable smartwatch or another wearable smart electronic device. This is not limited in this embodiment of this application.

In this embodiment of this application, the screen control apparatus may continuously detect the first motion parameter of the electronic device, or may periodically detect the first motion parameter of the electronic device.

In this embodiment of this application, the first motion parameter is a parameter for determining a wearing position of the electronic device in a parameter corresponding to a current motion state of the electronic device.

In an example, the first motion parameter may include a direction parameter, a velocity parameter, and the like. Generally, an acceleration parameter and a direction parameter of centripetal force may be included. This is not limited in this embodiment of this application.

In this embodiment of this application, the electronic device may detect the first motion parameter by using a motion state detection device inside the electronic device.

In an example, the electronic device may detect the first motion parameter by using a built-in gyroscope (gyro) and an acceleration sensor (acceleration sensor, acc). For example, a motion direction and a motion speed of the smartwatch are detected by using the built-in gyroscope.

It should be noted that in this embodiment of this application, the motion state of the electronic device may be a motion state on a stable plane, for example, an X-Y axis plane. It may be understood that the foregoing plane may be a relative planes such as a plane conforming to two axes (for example, a plane in any direction composed of two axes relative to 90°), and is not necessarily an absolute plane such as an absolute horizontal plane. In an example, the motion state on the stable plane may be a translational motion on any two-axis plane. For example, when the two-axis plane is an X-Y axis plane, the motion state may be a translational rotational motion of the electronic device on the X-Y axis plane.

Step 302: The screen control apparatus determines a wearing position of the electronic device based on the first motion parameter.

In this embodiment of this application, when the electronic device is worn at different positions, the electronic device corresponds to different first motion parameters. The electronic device may prestore a correspondence between a first motion parameters and a wearing position in the electronic device, or a user may customize the correspondence between a first motion parameters and a wearing position. This is not limited in this embodiment of this application.

It should be noted that when the electronic device is a device worn by the user, this embodiment of this application may be performed in a case that the electronic device does not set the wearing position or it is detected that the user removes the electronic device and the wearing position needs to be reset. After the wearing position is determined, if no change of the wearing position by the electronic device is detected, the determined result may be continuously used as the default wearing position, or steps 301 and 302 may be repeatedly performed by using the first motion parameter, and the first motion parameter is continuously detected and the accurate wearing position is determined. This is not limited in this embodiment of this application.

Step 303: The screen control apparatus turns on a screen of the electronic device in a case that the wearing position is a first position and a second motion parameter of the electronic device meets a first preset condition; or turns off the screen of the electronic device in a case that the wearing position is the first position and the second motion parameter of the electronic device meets a second preset condition.

In this embodiment of this application, the first preset condition matches the first position, and the second preset condition matches the first position.

In this embodiment of this application, the first position may be an example wearing position of the electronic device. For example, the user wears the electronic device on a left wrist and the left wrist is the first position.

In this embodiment of this application, the second motion parameter is a motion parameter for determining whether the electronic device is in a screen-on state or a screen-off state in a case that the wearing position of the electronic device is the first position. For example, assuming that the first position is the left wrist, the second motion parameter is a motion parameter of a motion process in which the user raises the wrist to the front, or a motion parameter of a motion process in which the user lowers the wrist.

In this embodiment of this application, the first preset condition is a condition corresponding to a case that the second motion parameter may meet a screen-on condition, and the second preset condition is a condition corresponding to a case that the second motion parameter may meet a screen-off condition.

In this embodiment of this application, the first preset condition and the second preset condition may be preset thresholds of different region ranges. The preset threshold may be preset by the electronic device, or may be defined by the user. This is not limited in this embodiment of this application.

It may be understood that the first preset condition and the second preset condition may be a same type of representation as the second motion parameter. For example, when the second motion parameter is an angle parameter, the first preset condition and the second preset condition may be respectively angle parameter ranges corresponding to a screen-on state and a screen-off state. Alternatively, the first preset condition and the second preset condition may be different types of representation from the second motion parameter. For example, when the second motion parameter is an angle parameter, the first preset condition and the second preset condition are respectively direction parameters corresponding to a screen-on state and a screen-off state. When obtaining the angle parameter, the electronic device may convert the angle parameter into a direction parameter, and compare the direction parameter with the first preset condition and the second preset condition, thereby determining a screen-on state and a screen-off state.

In an example, the second motion parameter may be a Z-axis rotation direction parameter when the electronic device moves. Generally, the electronic device may determine the Z-axis rotation direction parameter by using a gyroscope. The first preset condition may be a parameter range of a Z-axis rotation direction parameter corresponding to a screen-on state when the electronic device is worn at different positions, and the second preset condition may be a parameter range of a Z-axis rotation direction parameter corresponding to a screen-off state when the electronic device is worn at different positions.

For example, when the electronic device is a smartwatch, and it is determined that the smartwatch is worn on the left wrist of the user (that is, the first position), if the gyroscope of the electronic device learns that the electronic device rotates clockwise along a Z-axis rotation direction (that is, the first preset condition), the screen is turned on, and if the gyroscope of the electronic device learns that the electronic device rotates counterclockwise along the Z-axis rotation direction (that is, the second preset condition), the screen is turned off.

According to the screen control method provided in this embodiment of this application, a screen control apparatus first detects a first motion parameter of the electronic device, and then determines, based on the detected first motion parameter, a wearing position of a user wearing the electronic device. After the wearing position is determined, a screen of the electronic device is turned on in a case that the wearing position is a first position and a second motion parameter of the electronic device meets a first preset condition; or the screen of the electronic device is turned off in a case that the wearing position is the first position and the second motion parameter of the electronic device meets a second preset condition, where the first preset condition and the second preset condition respectively match the first position. In this way, the first motion parameter of the electronic device is detected, so that the wearing position of the user wearing the electronic device can be accurately determined. Therefore, a screen-on operation and a screen-off operation can be accurately determined when the user raises a wrist to view the electronic device, and the user can view content displayed on a display screen of the electronic device, thereby improving efficiency of using the electronic device by the user.

Optionally, in this embodiment of this application, in step 302 of determining a wearing position of the electronic device based on the first motion parameter, the screen control method provided in this embodiment of this application may include the following step A:
Step A: In a case that the first motion parameter includes a centripetal force parameter of the electronic device moving along a curved track, the screen control apparatus determines, based on the first motion parameter, a wearing position of a user wearing the electronic device.

In this embodiment of this application, the curved track is a motion track when the electronic device moves.

In an example, in a case that the electronic device is worn at a wrist, the motion track may include a circular motion with an elbow joint as a center, and the curved track may be a curved track of the circular motion with the elbow joint as the center.

In this embodiment of this application, for the centripetal force parameter, refer to the foregoing descriptions. Details are not described herein again.

In this embodiment of this application, when the centripetal force parameter includes a centripetal force direction and a centripetal acceleration, different centripetal force directions and centripetal accelerations may indicate centripetal force parameters of different motions of the electronic device, and correspond to different wearing positions.

In an example, when the wearing position of the electronic device is a wrist, a circular motion in which the electronic device is worn on a left wrist corresponds to a circular motion in which the electronic device is worn on a right wrist. Generally, in a process of the circular motion of the left wrist or the right wrist, static friction force is generated between the electronic device and the wrist, and a centripetal force parameter corresponding to the static friction force is generated. Since a motion direction of the circular motion on the left wrist is opposite to that on the right wrist, the accurate wearing position of the electronic device may be determined based on a change of centripetal force directions and centripetal accelerations of different centripetal force parameters corresponding to different circular motions.

Optionally, in this embodiment of this application, in step 302 of determining, based on the first motion parameter, a wearing position of a user wearing the electronic device, the screen control method provided in this embodiment of this application may include the following step B1 and step B2:
Step B1: In a case that the first motion parameter meets a third preset condition, the screen control apparatus determines that the electronic device is worn on a left hand of the user.
Step B2: In a case that the first motion parameter meets a fourth preset condition, the screen control apparatus determines that the electronic device is worn on a right hand of the user.

Optionally, in this embodiment of this application, the centripetal force parameter further includes a first centripetal force parameter in a first direction and a second centripetal force parameter in a second direction.

For example, the first direction and the second direction are two directions perpendicular to each other on a plane in which a display screen of the electronic device is located.

For example, the third preset condition is that the first centripetal force parameter changes from a negative value to a positive value, and the centripetal force parameter in the second direction changes from a positive value to a negative value; and the fourth preset condition is that the first centripetal force parameter changes from a positive value to a negative value, and the second centripetal force parameter changes from a negative value to a positive value.

For example, the third preset condition and the fourth preset condition may be pre-stored in the electronic device by the electronic device, or may be customized by the user. This is not limited in this embodiment of this application.

For example, the third preset condition may be a correspondence between a first motion parameter and a wearing position when the electronic device is worn on the left hand. Similarly, the fourth preset condition may be a correspondence between a first motion parameter and a wearing position when the electronic device is worn on the right hand.

For example, the first direction and the second direction may be two axes of the two-axis plane, and directions of the two axes may be respectively the first direction and the second direction.

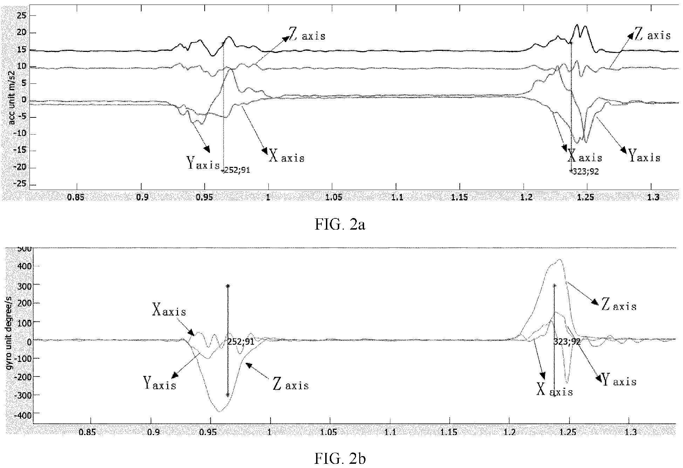

Example 1: Assuming that the electronic device is a smartwatch, and the first motion parameter is an acceleration and a centripetal force parameter, in a case that the user wears the smartwatch on the left wrist and the left hand is placed at rest on a desktop to continuously operate a computer mouse, the smartwatch automatically continuously detects a first motion parameter of the smartwatch. As shown in FIG. 2a and FIG. 2b, FIG. 2a is a fluctuation diagram of a change in a centripetal acceleration, and FIG. 2b is a fluctuation diagram of a change in a centripetal angular velocity. As shown in the figure, before a time point 9.5s, an acc sensor and a gyro of the smartwatch detect that a centripetal acceleration and a centripetal angular velocity of the smartwatch in X, Y, and Z axes fluctuate around 0 until a time period before and after 9.5s. In this time period, if a right arm of the user rotates counterclockwise with an elbow joint as an axis along a curved track of the circumference through a circular motion to move the wrist to the front, the acc detects that a centripetal acceleration in the Z axis fluctuates and a centripetal acceleration in the X axis is a negative value, and correspondingly, at the wrist, the smartwatch is directed toward a humerus from the wrist, and a centripetal acceleration in the Y axis changes from a negative value to a positive value, that is, the smartwatch is first subjected to thrust and then to tension, and the gyro detects that a centripetal angular velocity in the Z axis suddenly changes to -400 degrees/second and then rapidly changes to 0 degrees/second, and the centripetal angular velocity is a negative value. It may be learned from this centripetal angular velocity that the smartwatch rotates clockwise.

In a time period before and after 12.5s, if a left arm of the user rotates the wrist clockwise to the mouse with an elbow joint as an axis along a curved track of the circumference through a circular motion, the acc detects that a centripetal acceleration in the Z axis fluctuates, a centripetal acceleration in the X axis is a negative value, and a centripetal acceleration in the Y axis changes from a positive value to a negative value, that is, the smartwatch is subjected to tension and then to thrust, and the gyro detects that a centripetal angular velocity in the Z axis suddenly changes to 400 degrees/second and then rapidly increases to 0 degrees/second, and the centripetal angular velocity is a positive value. It may be comprehensively determined, based on the centripetal acceleration and the angular velocity, that the smartwatch rotates counterclockwise.

Through the above two changes of the first motion parameter, based on the preset correspondence between a first motion parameter and a wearing position (that is, the first motion parameter meets the first preset condition), it may be determined that the smartwatch is worn on the left hand.

After it is determined that the smartwatch is worn on the left hand, when the gyro detects that a rotation direction of the electronic device along the Z axis (that is, the second motion parameter) is clockwise rotation (that is, the first preset condition), the screen is turned on, or if the gyro of the smartwatch detects that the rotation direction of the smartwatch along the Z axis (that is, the second motion parameter) is counterclockwise rotation (that is, the second preset condition), the screen is turned off.

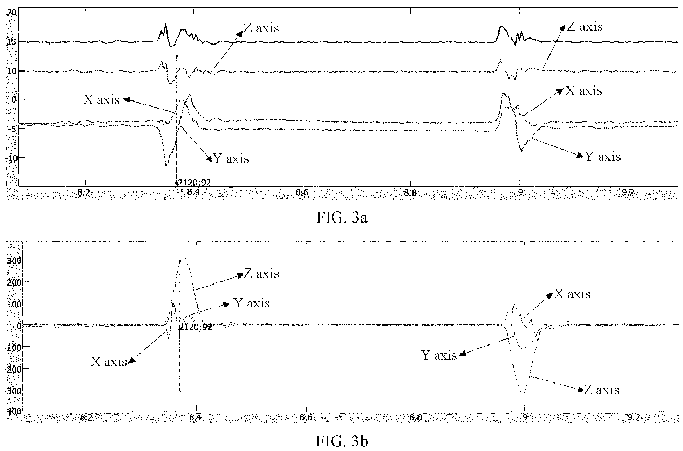

Example 2: Assuming that the electronic device is a smartwatch, and the first motion parameter is an acceleration and a centripetal force parameter, in a case that the user wears the smartwatch on the right wrist and the right hand is placed at rest on a desktop to continuously operate a computer mouse, the smartwatch automatically continuously detects a first motion parameter of the smartwatch. As shown in FIG. 3a and FIG. 3b, FIG. 3a is a fluctuation diagram of a change in a centripetal acceleration, and FIG. 3b is a fluctuation diagram of a change in a centripetal angular velocity. Before a time point 84s, an acc sensor and a gyro of the smartwatch detect that a centripetal acceleration and a centripetal angular velocity of the smartwatch in X, Y, and Z axes fluctuate around 0 until a time period before and after 84s. In this time period, if a right arm of the user rotates counterclockwise with an elbow joint as an axis along a curved track of the circumference through a circular motion to move the wrist to the front, the acc detects that a centripetal acceleration in the Z axis fluctuates and a centripetal acceleration in the X axis is a positive value, and correspondingly, at the wrist, the smartwatch is directed toward a humerus from the wrist, and an acceleration in the Y axis changes from a negative value to a positive value, that is, the smartwatch is first subjected to thrust and then to tension, and the gyro detects that a centripetal angular velocity in the Z axis suddenly changes to 300 degrees/second and then rapidly reduces to 0 degrees/second, and the centripetal angular velocity is a positive value. It may be learned from this centripetal angular velocity that the smartwatch rotates counterclockwise.

In a time period before and after 90s, if a right arm of the user rotates the wrist clockwise to the mouse with an elbow joint as an axis along a curved track of the circumference through a circular motion, the acc detects that a centripetal acceleration in the Z axis fluctuates, a centripetal acceleration in the X axis is a positive value, and a centripetal acceleration in the Y axis changes from a positive value to a negative value, that is, the smartwatch is subjected to thrust and then to tension, and the gyro detects that a centripetal angular velocity in the Z axis suddenly increases to -300 degrees/second and then rapidly increases to 0 degrees/second, and the centripetal angular velocity is a negative value. It may be comprehensively determined, based on the centripetal acceleration and the angular velocity, that the smartwatch rotates clockwise.

Through the above two changes of the first motion parameter, based on the preset correspondence between a first motion parameter and a wearing position (that is, the first motion parameter meets the second preset condition), it may be determined that the smartwatch is worn on the right hand.

After it is determined that the smartwatch is worn on the right hand, when the gyro detects that a rotation direction of the electronic device along the Z axis is counterclockwise rotation (that is, the first preset condition), the screen is turned on, or if the gyro of the smartwatch detects that the rotation direction of the smartwatch along the Z axis is clockwise rotation (that is, the second preset condition), the screen is turned off.

It may be understood that in the foregoing example 1 and example 2, because the two hand operations of the user are stationary, the thrust and the tension are approximately equal to each other in opposite directions. For example, an integral area of the acceleration sensor acc in a positive direction in the Y axis is equal to an integral area in a negative direction. However, there is no positive-negative cancellation of the acceleration sensor in the X axis. Therefore, there is no combination of the thrust and the tension, and only static friction is used as centripetal force. In an example, sliding friction may be used as centripetal force in a case that there is a relative motion between a dial of the smartwatch and the hand.

In this way, the electronic device may accurately determine based on a preset condition and the obtained first motion parameter, that the electronic device is worn on the left hand or the right hand, and further, the electronic device may accurately determine a moment at which the user needs to view and turn on or turn off the screen, thereby reducing resource consumption of the electronic device.

Optionally, in this embodiment of this application, after step 302 of determining a wearing position of the electronic device based on the first motion parameter, the screen control method provided in this embodiment of this application further includes the following step C:
Step C: The screen control apparatus re-determines the wearing position of the electronic device in a case that an obstacle is detected in a predetermined region at a position at which the electronic device is located.

For example, the electronic device may detect a shielding object by using a sensor. For example, the electronic device may detect the shielding object by using an infrared sensor, or may detect the shielding object by using a capacitive touch sensor.

For example, the predetermined region may be preset by the electronic device or may be customized by the user.

For example, the screen control apparatus may re-determine the wearing position of the electronic device by redetecting the first motion parameter of the electronic device.

For example, the predetermined region may be determined based on a condition of redetecting the first motion parameter of the electronic device.

In an example, when the condition for redetecting the first motion parameter of the electronic device is that the user removes the electronic device, the predetermined region may be set on the back of the electronic device, and in a case that the electronic device is disconnected from the user, the electronic device may sense, through the sensor, that the back of the electronic device changes from being shielded to unshielded, and further perform step 301 and step 302, redetect the first motion parameter of the electronic device, and further re-determine the wearing position of the electronic device.

In this way, the electronic device may redetect the first motion parameter of the electronic device in a specific case, and then re-determine the wearing position. Therefore, in a case that the wearing position is accurately determined, the first motion parameter does not need to be continuously detected, so that resource consumption of the electronic device can be reduced.

Optionally, in this embodiment of this application, in step 301, the screen control method provided in this embodiment of this application may include the following step D:
Step D: The screen control apparatus detects the first motion parameter of the electronic device in a case that the electronic device is in a preset motion state in a third direction.

For example, the third direction is a direction perpendicular to the plane in which the display screen of the electronic device is located.

For example, the preset motion state may be that the first motion parameter in the third direction exceeds a preset threshold.

It may be understood that when the electronic device is in a stable state on the two-axis plane (that is, in a case that there is no centripetal force parameter exceeding the preset threshold, for example, an arm is placed at rest on the two-axis plane), the electronic device does not have the centripetal force parameter. In a case that the first motion parameter of the electronic device in the third direction reaches the preset threshold, the electronic device may determine that the electronic device has the centripetal force parameter, and may determine the wearing position of the portable electronic device by detecting the first motion parameter.

In an example, the first motion parameter in the third direction may be a first motion parameter for a circular motion around the third direction in a plane in which the first direction and the second direction lie. The first motion parameter may include centripetal force parameters in the first direction, the second direction, and the third direction, and the centripetal force parameter may include a centripetal angular velocity and a centripetal acceleration.

Example 3: For example, the electronic device is a smartwatch, the first direction is an X axis, the second direction is a Y axis, and the third direction is a Z axis. In a case that the smartwatch is stationary on an X-Y plane and circumferentially moves around the Z axis, a motion amplitude is less than a preset threshold. Therefore, the first motion parameter is not detected until the smartwatch circumferentially moves around the Z axis, so that a motion amplitude in the Z axis is greater than or equal to the preset threshold, and the first motion parameter of the electronic device is detected.

In this way, a timing for detecting the first motion parameter of the electronic device may be determined based on the preset motion state in the third direction, so that screen control is detected at an appropriate timing, and the wearing position of the portable electronic device can be accurately determined.

It should be noted that the screen control method provided in the embodiments of this application may be performed by a screen control apparatus, or a control module that is in the screen control apparatus and that is configured to perform the screen control method. In the embodiments of this application, that the screen control apparatus performs the screen control method is used as an example to describe the screen control apparatus provided in the embodiments of this application.

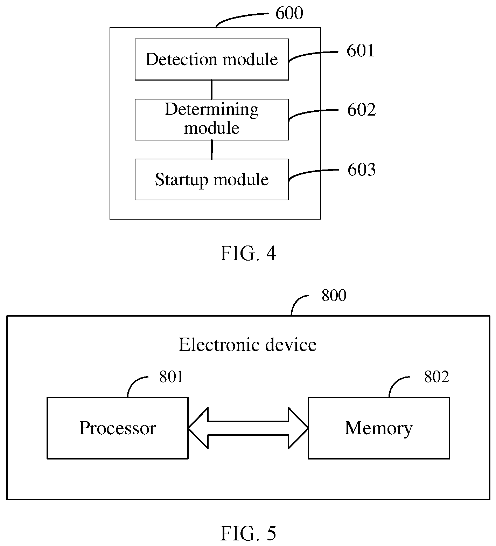

FIG. 4 is a possible schematic structural diagram of a screen control apparatus according to an embodiment of this application. As shown in FIG. 4, the screen control apparatus 600 includes a detection module 601, a determining module 602, and a startup module 603. The detection module 601 is configured to detect a first motion parameter of an electronic device; the determining module is configured to determine, based on the first motion parameter detected by the detection module 600, a wearing position of a user wearing the electronic device; and the startup module 603 is configured to: turn on a screen of the electronic device in a case that the determining module 602 determines that the wearing position is a first position and a second motion parameter of the electronic device meets a first preset condition, where the first preset condition matches the first position; or turn off the screen of the electronic device in a case that the determining module determines that the wearing position is the first position and the second motion parameter of the electronic device meets a second preset condition, where the second preset condition matches the first position.

According to the screen control apparatus provided in this embodiment of this application, the screen control apparatus first detects a first motion parameter of the electronic device, and then determines, based on the detected first motion parameter, a wearing position of a user wearing the electronic device. After the wearing position is determined, a screen of the electronic device is turned on in a case that the wearing position is a first position and a second motion parameter of the electronic device meets a first preset condition; or the screen of the electronic device is turned off in a case that the wearing position is the first position and the second motion parameter of the electronic device meets a second preset condition, where the first preset condition and the second preset condition respectively match the first position. In this way, the first motion parameter of the electronic device is detected, so that the wearing position of the user wearing the electronic device can be accurately determined. Therefore, a screen-on operation and a screen-off operation can be accurately determined when the user raises a wrist to view the electronic device, and the user can view content displayed on a display screen of the electronic device, thereby improving efficiency of using the electronic device by the user.

Optionally, in this embodiment of this application, the determining module 602 is specifically configured to: in a case that the detection module 601 detects that the first motion parameter includes a centripetal force parameter of the electronic device moving along a curved track, determine the wearing position of the electronic device based on the first motion parameter.

Optionally, in this embodiment of this application, the determining module 602 is specifically configured to: in a case that the first motion parameter meets a third preset condition, determine that the electronic device is worn on a left hand of the user; or the determining module 602 is specifically configured to: in a case that the first motion parameter meets a fourth preset condition, determine that the electronic device is worn on a right hand of the user.

Optionally, in this embodiment of this application, the centripetal force parameter includes a first centripetal force parameter in a first direction and a second centripetal force parameter in a second direction. The first direction and the second direction are two directions perpendicular to each other on a plane in which a display screen of the electronic device is located. The third preset condition is that the first centripetal force parameter changes from a negative value to a positive value, and the centripetal force parameter in the second direction changes from a positive value to a negative value; and the fourth preset condition is that the first centripetal force parameter changes from a positive value to a negative value, and the second centripetal force parameter changes from a negative value to a positive value.

Optionally, in this embodiment of this application, the detection module is further configured to re-determine the wearing position of the electronic device in a case that an obstacle is detected in a predetermined region at a position at which the electronic device is located.

Optionally, in this embodiment of this application, the detection module 601 is specifically configured to detect the first motion parameter of the electronic device in a case that the electronic device is in a preset motion state in a third direction, where the third direction is a direction perpendicular to the plane in which the display screen of the electronic device is located.

The screen control apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), an automated teller machine, or a self-service machine. This is not specifically limited in the embodiments of this application.

The screen control apparatus in this embodiment of this application may be an apparatus with an operating system. The operating system may be an Android (Android) operating system, an iOS operating system, or another possible operating system. This is not specifically limited in this embodiment of this application.

The screen control apparatus provided in this embodiment of this application can implement the processes implemented in the method embodiments in FIG. 1 to FIGS. 3a-3b. To avoid repetition, details are not described herein again.

It should be noted that, as shown in FIG. 4, modules such as the detection module 601 necessarily included in the screen control apparatus 600 is illustrated by a solid-line box.

Optionally, as shown in FIG. 5, an embodiment of this application further provides an electronic device 800, including a processor 801, a memory 802, and a program or an instruction stored in the memory 802 and executable on the processor 801. When the program or the instruction is executed by the processor 801, the processes of the screen control method embodiment are implemented, and a same technical effect can be achieved. To avoid repetition, details are not described herein again.

It should be noted that the electronic device in this embodiment of this application includes the foregoing mobile electronic device and the foregoing non-mobile electronic device.

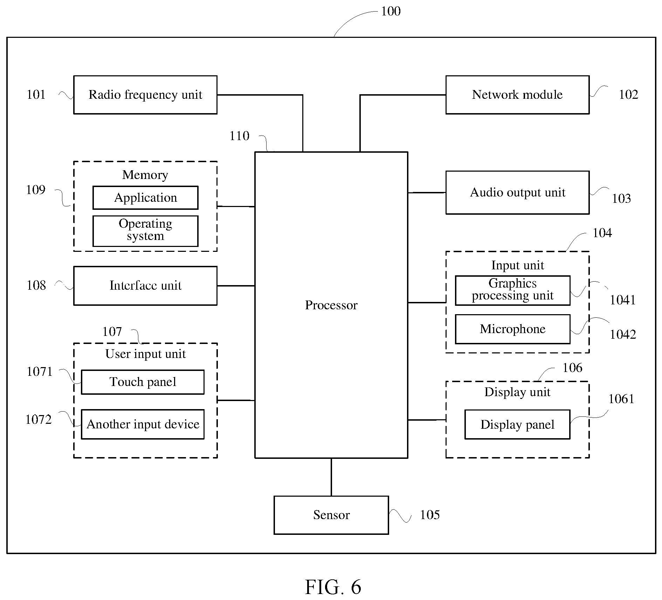

FIG. 6 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110. The user input unit 107 includes a touch panel 1071 and another input device 1072. The display unit 106 includes a display panel 1061, the input unit 104 includes an image processor 1041 and a microphone 1042, and the memory 109 may be configured to store a software program (for example, an operating system and an application required by at least one function) and various types of data.

A person skilled in the art can understand that the electronic device 100 may further include a power supply (such as a battery) that supplies power to each component. The power supply may be logically connected to the processor 110 by using a power supply management system, to implement functions such as charging and discharging management, and power consumption management by using the power supply management system. The structure of the electronic device shown in FIG. 6 does not constitute a limitation on the electronic device. The electronic device may include components more or fewer than those shown in the diagram, a combination of some components, or different component arrangements. Details are not described herein.

The processor 110 is configured to detect a first motion parameter of an electronic device; the processor 110 is further configured to determine, based on the first motion parameter, a wearing position of a user wearing the electronic device; and the processor 110 is further configured to: turn on a screen of the electronic device in a case that the wearing position is a first position and a second motion parameter of the electronic device meets a first preset condition, where the first preset condition matches the first position; or turn off the screen of the electronic device in a case that the wearing position is the first position and the second motion parameter of the electronic device meets a second preset condition, where the second preset condition matches the first position.

According to the electronic device provided in this embodiment of this application, the electronic device first detects a first motion parameter of the electronic device, and then determines, based on the detected first motion parameter, a wearing position of a user wearing the electronic device. After the wearing position is determined, a screen of the electronic device is turned on in a case that the wearing position is a first position and a second motion parameter of the electronic device meets a first preset condition; or the screen of the electronic device is turned off in a case that the wearing position is the first position and the second motion parameter of the electronic device meets a second preset condition, where the first preset condition and the second preset condition respectively match the first position. In this way, the first motion parameter of the electronic device is detected, so that the wearing position of the user wearing the electronic device can be accurately determined. Therefore, a screen-on operation and a screen-off operation can be accurately determined when the user raises a wrist to view the electronic device, and the user can view content displayed on a display screen of the electronic device, thereby improving efficiency of using the electronic device by the user.

Optionally, the processor 110 is specifically configured to: in a case that the first motion parameter includes a centripetal force parameter of the electronic device moving circumferentially along a curved track, determine the wearing position of the electronic device based on the first motion parameter.

Optionally, the processor 110 is specifically configured to: in a case that the first motion parameter meets a third preset condition, determine that the electronic device is worn on a left hand of the user; or the processor 110 is specifically configured to: in a case that the first motion parameter meets a fourth preset condition, determine that the electronic device is worn on a right hand of the user.

Optionally, the processor 110 is further configured to re-determine the wearing position of the electronic device in a case that an obstacle is detected in a predetermined region at a position at which the electronic device is located.

Optionally, the processor 110 is specifically configured to detect the first motion parameter of the electronic device in a case that the electronic device is in a preset motion state in a third direction, where the third direction is a direction perpendicular to the plane in which the display screen of the electronic device is located.

It should be understood that, in this embodiment of this application, the input unit 104 may include a graphics processing unit (Graphics Processing Unit, GPU) 1041 and a microphone 1042, and the graphics processing unit 1041 processes image data of a still picture or a video obtained by an image capture apparatus (such as a camera) in a video capture mode or an image capture mode. The display unit 106 may include a display panel 1061. Optionally, the display panel 1061 may be configured in a form such as a liquid crystal display or an organic light-emitting diode. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein. The memory 109 may be configured to store a software program and various data, including but not limited to an application and an operating system. An application processor and a modem processor may be integrated into the processor 110, the application processor mainly processes an operating system, a user interface, an application program, and the like, and the modem processor mainly processes wireless communication. It can be understood that, alternatively, the modem processor may not be integrated into the processor 110.

An embodiment of this application further provides a readable storage medium. The readable storage medium stores a program or an instruction, and when the program or the instruction is executed by a processor, the processes of the foregoing screen control method embodiment are implemented and a same technical effect can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to execute a program or an instruction to implement the processes of the foregoing screen control method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the scope of this application defined by the appended claims.

## Claims

1. A screen control method, performed by an electronic device, wherein the method comprises:
detecting a motion amplitude of the electronic device circumferentially moving around an axis that is perpendicular to a plane on which the electronic device is stationary;
in response to the motion amplitude being greater than or equal to a preset threshold, detecting (301) a first motion parameter of the electronic device, wherein the first motion parameter comprises a centripetal force parameter detected during motion of the electronic device along a curved track;
determining (302) a wearing position of the electronic device based on at least a change in the centripetal force parameter in the first motion parameter; and
turning on (303) a screen of the electronic device in a case that the wearing position is a first position and a second motion parameter of the electronic device meets a first preset condition; or turning off (303) the screen of the electronic device in a case that the wearing position is the first position and the second motion parameter of the electronic device meets a second preset condition; wherein
the second motion parameter comprises an angle parameter when the electronic device moves, the first preset condition is a direction parameter corresponding to a screen-on state, and the second preset condition is a direction parameter corresponding to a screen-off state;
converting the angle parameter into a direction parameter, and comparing a converted direction parameter with the first preset condition and the second preset condition, to determine the turn-on state or the turn-off-state of the electronic device;
wherein after the determining (302) a wearing position of the electronic device based on at least a change in the centripetal force parameter in the first motion parameter, the method further comprises:
in response to the back of the electronic device changing from being shielded to unshielded, re-determining a wearing position of the electronic device.

2. The method according to claim 1, wherein the centripetal force is indicative of a centripetal force direction or a centripetal acceleration.

3. The method according to claim 2, wherein the determining (302) a wearing position of the electronic device based on at least a change in the centripetal force parameter in the first motion parameter comprises:
in a case that the first motion parameter meets a third preset condition, determining that the electronic device is worn on a left hand of a user; or
in a case that the first motion parameter meets a fourth preset condition, determining that the electronic device is worn on a right hand of the user.

4. The method according to claim 3, wherein the centripetal force parameter comprises a first centripetal force parameter in a first direction and a second centripetal force parameter in a second direction; wherein
the first direction and the second direction are two directions perpendicular to each other on a plane in which a display screen of the electronic device is located; and
the third preset condition is that the first centripetal force parameter changes from a negative value to a positive value, and the second centripetal force parameter changes from a positive value to a negative value; and the fourth preset condition is that the first centripetal force parameter changes from a positive value to a negative value, and the second centripetal force parameter changes from a negative value to a positive value.

5. The method according to any one of claims 1 to 4, wherein the detecting (301) a first motion parameter of the electronic device comprises:
detecting the first motion parameter of the electronic device in a case that the electronic device is in a preset motion state in a third direction; wherein
the third direction is a direction perpendicular to a plane in which a display screen of the electronic device is located.

6. A screen control apparatus (600), wherein the apparatus (600) comprises a processor (110), wherein
the processor (110) is configured to detect a motion amplitude of an electronic device circumferentially moving around an axis that is perpendicular to a plane on which the electronic device is stationary;
the processor (110)is further configured to detect a first motion parameter of an electronic device in response to the motion amplitude being greater than or equal to a preset threshold, wherein the first motion parameter comprises a centripetal force parameter detected during motion of the electronic device along a curved track;
the processor (110) is further configured to determine a wearing position of the electronic device based on at least a change in the centripetal force parameter in the first motion parameter detected by the processor (110);
the processor (110) is further configured to: turn on a screen of the electronic device in a case that the processor (110) determines that the wearing position is a first position and a second motion parameter of the electronic device meets a first preset condition; or turn off the screen of the electronic device in a case that the processor (110)determines that the wearing position is the first position and the second motion parameter of the electronic device meets a second preset condition; wherein
the second motion parameter comprises an angle parameter when the electronic device moves, the first preset condition is a direction parameter corresponding to a screen-on state, and the second preset condition is a direction parameter corresponding to a screen-off state;
the processor (110) is further configured to convert the angle parameter into a direction parameter, and compare a converted direction parameter with the first preset condition and the second preset condition, to determine the turn-on-state or the turn-off-state of the electronic device; and
the processor (110) is further configured to re-determine a wearing position of the electronic device in response to the back of the electronic device changing from being shielded to unshielded.

7. The apparatus (600) according to claim 6, wherein the centripetal force is indicative of a centripetal force direction or a centripetal acceleration.

8. The apparatus (600) according to claim 7, wherein
the processor (110) is specifically configured to: in a case that the first motion parameter meets a third preset condition, determine that the electronic device is worn on a left hand of a user; or
the processor (110) is specifically configured to: in a case that the first motion parameter meets a fourth preset condition, determine that the electronic device is worn on a right hand of the user.

9. The apparatus (600) according to claim 8, wherein the centripetal force parameter comprises a first centripetal force parameter in a first direction and a second centripetal force parameter in a second direction; wherein
the first direction and the second direction are two directions perpendicular to each other on a plane in which a display screen of the electronic device is located; and
the third preset condition is that the first centripetal force parameter changes from a negative value to a positive value, and the centripetal force parameter in the second direction changes from a positive value to a negative value; and the fourth preset condition is that the first centripetal force parameter changes from a positive value to a negative value, and the second centripetal force parameter changes from a negative value to a positive value.

10. The apparatus (600) according to any one of claims 6 to 9, wherein
the processor (110)is specifically configured to detect the first motion parameter of the electronic device in a case that the electronic device is in a preset motion state in a third direction; wherein
the third direction is a direction perpendicular to a plane in which a display screen of the electronic device is located.

11. A readable storage medium, wherein the readable storage medium stores a program or an instruction, and when the program or the instruction is executed by a processor (110), the steps of the screen control method according to any one of claims 1 to 5 are implemented.

12. A chip, wherein the chip comprises a processor and a communication interface, the communication interface is coupled to the processor, and the processor is configured to execute a program or an instruction to implement the steps of the screen control method according to any one of claims 1 to 5.

13. A computer program product, wherein the computer program product is stored in a non-volatile storage medium, and the computer program product is executed by at least one processor to implement the steps of the screen control method according to any one of claims 1 to 5.

## Patentansprüche

1. Ein Bildschirmsteuerungsverfahren, das von einer elektronischen Vorrichtung durchgeführt wird, wobei das Verfahren Folgendes beinhaltet:
Erfassen einer Bewegungsamplitude der elektronischen Vorrichtung, die sich in Umfangsrichtung um eine Achse bewegt, die senkrecht zu einer Ebene ist, auf der die elektronische Vorrichtung stationär ist;
als Reaktion darauf, dass die Bewegungsamplitude größer oder gleich einem voreingestellten Schwellenwert ist, Erfassen (301) eines ersten Bewegungsparameters der elektronischen Vorrichtung, wobei der erste Bewegungsparameter einen Zentripetalkraftparameter beinhaltet, der während der Bewegung der elektronischen Vorrichtung entlang einer gekrümmten Bahn erfasst wird;
Bestimmen (302) einer Trageposition der elektronischen Vorrichtung basierend auf mindestens einer Änderung des Zentripetalkraftparameters in dem ersten Bewegungsparameter; und
Einschalten (303) eines Bildschirms der elektronischen Vorrichtung, falls die Trageposition eine erste Position ist und ein zweiter Bewegungsparameter der elektronischen Vorrichtung eine erste voreingestellte Bedingung erfüllt; oder
Ausschalten (303) des Bildschirms der elektronischen Vorrichtung, falls die Trageposition die erste Position ist und der zweite Bewegungsparameter der elektronischen Vorrichtung eine zweite voreingestellte Bedingung erfüllt; wobei der zweite Bewegungsparameter einen Winkelparameter beinhaltet, wenn sich die elektronische Vorrichtung bewegt, die erste voreingestellte Bedingung ein Richtungsparameter ist, der einem Bildschirm-Ein-Zustand entspricht, und die zweite voreingestellte Bedingung ein Richtungsparameter ist, der einem Bildschirm-AusZustand entspricht;
Umwandeln des Winkelparameters in einen Richtungsparameter und Vergleichen eines umgewandelten Richtungsparameters mit der ersten voreingestellten Bedingung und der zweiten voreingestellten Bedingung, um den Einschaltzustand oder den Ausschaltzustand der elektronischen Vorrichtung zu bestimmen;
wobei nach dem Bestimmen (302) einer Trageposition der elektronischen Vorrichtung basierend auf mindestens einer Änderung des Zentripetalkraftparameters in dem ersten Bewegungsparameter das Verfahren ferner Folgendes beinhaltet:
als Reaktion darauf, dass sich die Rückseite der elektronischen Vorrichtung von abgeschirmt zu nicht abgeschirmt ändert, Neubestimmen einer Trageposition der elektronischen Vorrichtung.

2. Verfahren gemäß Anspruch 1, wobei die Zentripetalkraft eine Zentripetalkraftrichtung oder eine Zentripetalbeschleunigung angibt.

3. Verfahren gemäß Anspruch 2, wobei das Bestimmen (302) einer Trageposition der elektronischen Vorrichtung basierend auf mindestens einer Änderung des Zentripetalkraftparameters in dem ersten Bewegungsparameter Folgendes beinhaltet:
falls der erste Bewegungsparameter eine dritte voreingestellte Bedingung erfüllt, Bestimmen, dass die elektronische Vorrichtung an einer linken Hand eines Benutzers getragen wird; oder
falls der erste Bewegungsparameter eine vierte voreingestellte Bedingung erfüllt, Bestimmen, dass die elektronische Vorrichtung an einer rechten Hand des Benutzers getragen wird.

4. Verfahren gemäß Anspruch 3, wobei der Zentripetalkraftparameter einen ersten Zentripetalkraftparameter in einer ersten Richtung und einen zweiten Zentripetalkraftparameter in einer zweiten Richtung beinhaltet; wobei
die erste Richtung und die zweite Richtung zwei Richtungen sind, die senkrecht zueinander auf einer Ebene sind, in der ein Anzeigebildschirm der elektronischen Vorrichtung angeordnet ist; und
die dritte voreingestellte Bedingung ist, dass sich der erste Zentripetalkraftparameter von einem negativen Wert zu einem positiven Wert ändert und sich der zweite Zentripetalkraftparameter von einem positiven Wert zu einem negativen Wert ändert; und die vierte voreingestellte Bedingung ist, dass sich der erste Zentripetalkraftparameter von einem positiven Wert zu einem negativen Wert ändert und sich der zweite Zentripetalkraftparameter von einem negativen Wert zu einem positiven Wert ändert.

5. Verfahren gemäß einem der Ansprüche 1 bis 4, wobei das Erfassen (301) eines ersten Bewegungsparameters der elektronischen Vorrichtung Folgendes beinhaltet:
Erfassen des ersten Bewegungsparameters der elektronischen Vorrichtung, falls sich die elektronische Vorrichtung in einem voreingestellten Bewegungszustand in einer dritten Richtung befindet; wobei
die dritte Richtung eine Richtung ist, die senkrecht zu einer Ebene ist, in der ein Anzeigebildschirm der elektronischen Vorrichtung angeordnet ist.

6. Eine Bildschirmsteuerungseinrichtung (600), wobei die Einrichtung (600) einen Prozessor (110) beinhaltet, wobei
der Prozessor (110) konfiguriert ist, um eine Bewegungsamplitude einer elektronischen Vorrichtung zu erfassen, die sich in Umfangsrichtung um eine Achse bewegt, die senkrecht zu einer Ebene ist, auf der die elektronische Vorrichtung stationär ist; der Prozessor (110) ferner konfiguriert ist, um einen ersten Bewegungsparameter einer elektronischen Vorrichtung als Reaktion darauf zu erfassen, dass die Bewegungsamplitude größer oder gleich einem voreingestellten Schwellenwert ist, wobei der erste Bewegungsparameter einen Zentripetalkraftparameter beinhaltet, der während der Bewegung der elektronischen Vorrichtung entlang einer gekrümmten Bahn erfasst wird;
der Prozessor (110) ferner konfiguriert ist, um eine Trageposition der elektronischen Vorrichtung basierend auf mindestens einer Änderung des Zentripetalkraftparameters in dem ersten Bewegungsparameter zu bestimmen, der von dem Prozessor (110) erfasst wird;
der Prozessor (110) ferner konfiguriert ist, um: einen Bildschirm der elektronischen Vorrichtung einzuschalten, falls der Prozessor (110) bestimmt, dass die Trageposition eine erste Position ist, und ein zweiter Bewegungsparameter der elektronischen Vorrichtung eine erste voreingestellte Bedingung erfüllt; oder den Bildschirm der elektronischen Vorrichtung auszuschalten, falls der Prozessor (110) bestimmt, dass die Trageposition die erste Position ist, und der zweite Bewegungsparameter der elektronischen Vorrichtung eine zweite voreingestellte Bedingung erfüllt; wobei der zweite Bewegungsparameter einen Winkelparameter beinhaltet, wenn sich die elektronische Vorrichtung bewegt, die erste voreingestellte Bedingung ein Richtungsparameter ist, der einem Bildschirm-Ein-Zustand entspricht, und die zweite voreingestellte Bedingung ein Richtungsparameter ist, der einem Bildschirm-AusZustand entspricht;
der Prozessor (110) ferner konfiguriert ist, um den Winkelparameter in einen Richtungsparameter umzuwandeln und einen umgewandelten Richtungsparameter mit der ersten voreingestellten Bedingung und der zweiten voreingestellten Bedingung zu vergleichen, um den Einschaltzustand oder den Ausschaltzustand der elektronischen Vorrichtung zu bestimmen; und
der Prozessor (110) ferner konfiguriert ist, um eine Trageposition der elektronischen Vorrichtung als Reaktion darauf neu zu bestimmen, dass sich die Rückseite der elektronischen Vorrichtung von abgeschirmt zu nicht abgeschirmt ändert.

7. Einrichtung (600) gemäß Anspruch 6, wobei die Zentripetalkraft eine Zentripetalkraftrichtung oder eine Zentripetalbeschleunigung angibt.

8. Einrichtung (600) gemäß Anspruch 7, wobei
der Prozessor (110) insbesondere konfiguriert ist, um: falls der erste Bewegungsparameter eine dritte voreingestellte Bedingung erfüllt, zu bestimmen, dass die elektronische Vorrichtung an einer linken Hand eines Benutzers getragen wird; oder der Prozessor (110) insbesondere konfiguriert ist, um: falls der erste Bewegungsparameter eine vierte voreingestellte Bedingung erfüllt, zu bestimmen, dass die elektronische Vorrichtung an einer rechten Hand des Benutzers getragen wird.

9. Einrichtung (600) gemäß Anspruch 8, wobei der Zentripetalkraftparameter einen ersten Zentripetalkraftparameter in einer ersten Richtung und einen zweiten Zentripetalkraftparameter in einer zweiten Richtung beinhaltet; wobei
die erste Richtung und die zweite Richtung zwei Richtungen sind, die senkrecht zueinander auf einer Ebene sind, in der ein Anzeigebildschirm der elektronischen Vorrichtung angeordnet ist; und
die dritte voreingestellte Bedingung ist, dass sich der erste Zentripetalkraftparameter von einem negativen Wert zu einem positiven Wert ändert und sich der Zentripetalkraftparameter in der zweiten Richtung von einem positiven Wert zu einem negativen Wert ändert; und die vierte voreingestellte Bedingung ist, dass sich der erste Zentripetalkraftparameter von einem positiven Wert zu einem negativen Wert ändert und sich der zweite Zentripetalkraftparameter von einem negativen Wert zu einem positiven Wert ändert.

10. Einrichtung (600) gemäß einem der Ansprüche 6 bis 9, wobei
der Prozessor (110) insbesondere konfiguriert ist, um den ersten Bewegungsparameter der elektronischen Vorrichtung zu erfassen, falls sich die elektronische Vorrichtung in einem voreingestellten Bewegungszustand in einer dritten Richtung befindet; wobei die dritte Richtung eine Richtung ist, die senkrecht zu einer Ebene ist, in der ein Anzeigebildschirm der elektronischen Vorrichtung angeordnet ist.

11. Ein lesbares Speichermedium, wobei das lesbare Speichermedium ein Programm oder eine Anweisung speichert, und wenn das Programm oder die Anweisung von einem Prozessor (110) ausgeführt wird, die Schritte des Bildschirmsteuerungsverfahrens gemäß einem der Ansprüche 1 bis 5 implementiert werden.

12. Ein Chip, wobei der Chip einen Prozessor und eine Kommunikationsschnittstelle beinhaltet, wobei die Kommunikationsschnittstelle mit dem Prozessor gekoppelt ist und der Prozessor konfiguriert ist, um ein Programm oder eine Anweisung auszuführen, um die Schritte des Bildschirmsteuerungsverfahrens gemäß einem der Ansprüche 1 bis 5 zu implementieren.

13. Ein Computerprogrammprodukt, wobei das Computerprogrammprodukt in einem nichtflüchtigen Speichermedium gespeichert ist und das Computerprogrammprodukt von mindestens einem Prozessor ausgeführt wird, um die Schritte des Bildschirmsteuerungsverfahrens gemäß einem der Ansprüche 1 bis 5 zu implementieren.

## Revendications

1. Un procédé de commande d'écran, effectué par un dispositif électronique, le procédé comprenant :
la détection d'une amplitude de mouvement du dispositif électronique se mouvant circonférentiellement autour d'un axe qui est perpendiculaire à un plan sur lequel le dispositif électronique est stationnaire ;
en réponse au fait que l'amplitude de mouvement est supérieure ou égale à un seuil prédéfini, la détection (301) d'un premier paramètre de mouvement du dispositif électronique, le premier paramètre de mouvement comprenant un paramètre de force centripète détecté durant le mouvement du dispositif électronique le long d'une trajectoire courbe ;
la détermination (302) d'une position de port du dispositif électronique sur la base au moins d'une variation du paramètre de force centripète dans le premier paramètre de mouvement ; et
l'allumage (303) d'un écran du dispositif électronique dans le cas où la position de port est une première position et où un deuxième paramètre de mouvement du dispositif électronique remplit une première condition prédéfinie ; ou l'extinction (303) de l'écran du dispositif électronique dans le cas où la position de port est la première position et où le deuxième paramètre de mouvement du dispositif électronique remplit une deuxième condition prédéfinie ; dans lequel
le deuxième paramètre de mouvement comprend un paramètre d'angle lorsque le dispositif électronique se meut, la première condition prédéfinie est un paramètre de direction correspondant à un état Allumage d'écran, et la deuxième condition prédéfinie est un paramètre de direction correspondant à un état Extinction d'écran ;
il y a conversion du paramètre d'angle en un paramètre de direction, et comparaison d'un paramètre de direction obtenu par conversion à la première condition prédéfinie et à la deuxième condition prédéfinie, afin de déterminer l'état Allumer ou l'état Éteindre du dispositif électronique ;
le procédé comprenant en outre, après la détermination (302) d'une position de port du dispositif électronique sur la base au moins d'une variation du paramètre de force centripète dans le premier paramètre de mouvement :
en réponse au fait que l'arrière du dispositif électronique passe de couvert à découvert, la redétermination d'une position de port du dispositif électronique.

2. Le procédé selon la revendication 1, dans lequel la force centripète est indicative d'une direction de force centripète ou d'une accélération centripète.

3. Le procédé selon la revendication 2, dans lequel la détermination (302) d'une position de port du dispositif électronique sur la base au moins d'une variation du paramètre de force centripète dans le premier paramètre de mouvement comprend :
dans le cas où le premier paramètre de mouvement remplit une troisième condition prédéfinie, la détermination du fait que le dispositif électronique est porté sur la main gauche d'un utilisateur ; ou
dans le cas où le premier paramètre de mouvement remplit une quatrième condition prédéfinie, la détermination du fait que le dispositif électronique est porté sur la main droite de l'utilisateur.

4. Le procédé selon la revendication 3, dans lequel le paramètre de force centripète comprend un premier paramètre de force centripète dans une première direction et un deuxième paramètre de force centripète dans une deuxième direction ; dans lequel la première direction et la deuxième direction sont deux directions perpendiculaires l'une à l'autre sur un plan dans lequel se situe un écran d'affichage du dispositif électronique ; et
la troisième condition prédéfinie est que le premier paramètre de force centripète passe d'une valeur négative à une valeur positive, et que le deuxième paramètre de force centripète passe d'une valeur positive à une valeur négative ; et la quatrième condition prédéfinie est que le premier paramètre de force centripète passe d'une valeur positive à une valeur négative, et que le deuxième paramètre de force centripète passe d'une valeur négative à une valeur positive.

5. Le procédé selon l'une quelconque des revendications 1 à 4, dans lequel la détection (301) d'un premier paramètre de mouvement du dispositif électronique comprend :
la détection du premier paramètre de mouvement du dispositif électronique dans le cas où le dispositif électronique est dans un état de mouvement prédéfini dans une troisième direction ; dans lequel
la troisième direction est une direction perpendiculaire à un plan dans lequel se situe un écran d'affichage du dispositif électronique.

6. Un appareil de commande d'écran (600), l'appareil (600) comprenant un processeur (110), dans lequel
le processeur (110) est configuré pour détecter une amplitude de mouvement d'un dispositif électronique se mouvant circonférentiellement autour d'un axe qui est perpendiculaire à un plan sur lequel le dispositif électronique est stationnaire ;
le processeur (110) est en outre configuré pour détecter un premier paramètre de mouvement d'un dispositif électronique en réponse au fait que l'amplitude de mouvement est supérieure ou égale à un seuil prédéfini, le premier paramètre de mouvement comprenant un paramètre de force centripète détecté durant le mouvement du dispositif électronique le long d'une trajectoire courbe ;
le processeur (110) est en outre configuré pour déterminer une position de port du dispositif électronique sur la base au moins d'une variation du paramètre de force centripète dans le premier paramètre de mouvement détecté par le processeur (110) ; le processeur (110) est en outre configuré pour : allumer un écran du dispositif électronique dans le cas où le processeur (110) détermine que la position de port est une première position et qu'un deuxième paramètre de mouvement du dispositif électronique remplit une première condition prédéfinie ; ou éteindre l'écran du dispositif électronique dans le cas où le processeur (110) détermine que la position de port est la première position et que le deuxième paramètre de mouvement du dispositif électronique remplit une deuxième condition prédéfinie ; dans lequel le deuxième paramètre de mouvement comprend un paramètre d'angle lorsque le dispositif électronique se meut, la première condition prédéfinie est un paramètre de direction correspondant à un état Allumage d'écran, et la deuxième condition prédéfinie est un paramètre de direction correspondant à un état Extinction d'écran ;
le processeur (110) est en outre configuré pour convertir le paramètre d'angle en un paramètre de direction, et comparer un paramètre de direction obtenu par conversion à la première condition prédéfinie et à la deuxième condition prédéfinie, afin de déterminer l'état Allumer ou l'état Éteindre du dispositif électronique ; et
le processeur (110) est en outre configuré pour redéterminer une position de port du dispositif électronique en réponse au fait que l'arrière du dispositif électronique passe de couvert à découvert.

7. L'appareil (600) selon la revendication 6, dans lequel la force centripète est indicative d'une direction de force centripète ou d'une accélération centripète.

8. L'appareil (600) selon la revendication 7, dans lequel
le processeur (110) est spécifiquement configuré pour : dans le cas où le premier paramètre de mouvement remplit une troisième condition prédéfinie, déterminer que le dispositif électronique est porté sur la main gauche d'un utilisateur ; ou
le processeur (110) est spécifiquement configuré pour : dans le cas où le premier paramètre de mouvement remplit une quatrième condition prédéfinie, déterminer que le dispositif électronique est porté sur la main droite de l'utilisateur.

9. L'appareil (600) selon la revendication 8, dans lequel le paramètre de force centripète comprend un premier paramètre de force centripète dans une première direction et un deuxième paramètre de force centripète dans une deuxième direction ; dans lequel la première direction et la deuxième direction sont deux directions perpendiculaires l'une à l'autre sur un plan dans lequel se situe un écran d'affichage du dispositif électronique ; et
la troisième condition prédéfinie est que le premier paramètre de force centripète passe d'une valeur négative à une valeur positive, et que le paramètre de force centripète dans la deuxième direction passe d'une valeur positive à une valeur négative ; et la quatrième condition prédéfinie est que le premier paramètre de force centripète passe d'une valeur positive à une valeur négative, et que le deuxième paramètre de force centripète passe d'une valeur négative à une valeur positive.

10. L'appareil (600) selon l'une quelconque des revendications 6 à 9, dans lequel le processeur (110) est spécifiquement configuré pour détecter le premier paramètre de mouvement du dispositif électronique dans le cas où le dispositif électronique est dans un état de mouvement prédéfini dans une troisième direction ; dans lequel la troisième direction est une direction perpendiculaire à un plan dans lequel se situe un écran d'affichage du dispositif électronique.

11. Un support de stockage lisible, le support de stockage lisible stockant un programme ou une instruction, et lorsque le programme ou l'instruction est exécuté par un processeur (110), les étapes du procédé de commande d'écran selon l'une quelconque des revendications 1 à 5 étant mises en oeuvre.

12. Une puce, la puce comprenant un processeur et une interface de communication, l'interface de communication étant couplée au processeur, et le processeur étant configuré pour exécuter un programme ou une instruction afin de mettre en oeuvre les étapes du procédé de commande d'écran selon l'une quelconque des revendications 1 à 5.

13. Un produit programme d'ordinateur, le produit programme d'ordinateur étant stocké dans un support de stockage non volatil, et le produit programme d'ordinateur étant exécuté par au moins un processeur pour mettre en oeuvre les étapes du procédé de commande d'écran selon l'une quelconque des revendications 1 à 5.
